# EUROPEAN PATENT APPLICATION

(11) **EP 1 500 683 A1**
(43) Date of publication of application: **26.01.2005**
(21) Application number: 03077302.2
(22) Date of filing: 21.07.2003
(51) Int. Cl.: C08L 67/00, C08H 1/00, C08L 89/00, C08J 5/18, C08J 7/04, B65D 65/46, A23L 1/10

(54) **Method for making a biodegradable moulding**

(71) Applicant: Via Management Spolka z o.o., 00549 Warszawa (PL)
(72) Inventor: Wysocki, Jerzy, 18300 Zambrow (PL); Thoden van Velzen, Eggo Ulphard, 6662 TP Elst (NL); Snijder, Martin Hendricus Bernard, 6706 JR Wageningen (NL); Keijsers, Edwin Richard Peter, 6702 CT Wageningen (NL); Schennink, Geraldus Gerardus Johannes, 7031 CR Wehl (NL)
(74) Representative: Prins, Adrianus Willem, Mr. Ir.

(57) **Abstract**

The invention relates to a method for making a biodegradable moulding and to a moulding obtainable according to the invention. In a method according to the invention a moulding is made from fibre particles, such as bran or bran-like material, which particles are subjected to a pre-treatment in order to improve the manufacturing process and/or the quality of the produced moulding.

## Description

The invention relates to a method for making a biodegradable moulding and to a moulding obtainable according to the invention.

For a long time, the packaging industry and the table utensils industry has been trying to find satisfactory alternatives for plastic materials. This problem is in particular relevant in the manufacture of disposable packaging materials, such as disposable containers, and in the manufacture of disposable table utensils. After all, the volumes of waste created by these products, are an important environmental burden. Lack of effective recycling processes in respect to waste plastic materials and large-scale character of using disposable plastic table utensils results in avalanche-like increase in globally produced quantities of non-biodegradable and environment polluting plastic wastes.

Various reports have been made of using more ecologically sound materials of biological origin such as paper or materials comprising a polysaccharide such as starch or cellulose and optionally a synthetic polymer to manufacture biodegradable products. As indicated in WO 01/39612, such products still suffer from drawbacks, such as problems relating to the generation of polluting waste streams (in particular in the case of paper), high manufacturing cost and/or difficulties to controlling the product quality. In order to address such problems, WO 01/39612 disclosed a process to manufacture biodegradable mouldings from bran. The described process is environmentally friendly, economically attractive, well-controllable and has satisfactory physical properties.

There remains a need though, for further processes that are suitable to make biodegradable products, which are environmentally friendly and have a satisfactory price to quality ratio.

It has now been found that this is realised by a moulding process, wherein fibre particles, such as bran, are subjected to a specific treatment prior to being moulded.

Accordingly, the present invention relates to a method for making a biodegradable moulding, comprising disrupting the surface of fibre particles, such as bran, placing the disrupted fibre particles in a mould and exposing the disrupted fibre particles in the mould to a pressure to form the moulding.

The present invention has been found very suitable far making a table utensil or packaging container.

It has been found that disrupting the fibre particles contributed to the cohering of the particles when being moulded. Thus a mould with satisfactory properties can be obtained within a shorter period of moulding and/or under milder moulding conditions (such as lower temperature and/or lower pressure). Without being bound by theory, the inventors contemplate that the disrupting opens up the fibre particles and allows (improved) participation of components present inside the particles in the binding process of the separate particles.

Further, it has been found that disrupting the fibre particles contributes to homogenising the raw material and contributes to a more reproducible production of moulded articles. Therefore, a method according to the invention allows for the production of a moulding with a very low rate of product rejection.

From an economical viewpoint, a method according to the invention is attractive because the reduction in the total moulding time, in comparison to a similar process without the disrupting of the particles, in order to make a moulding with the same physical properties (such as stiffness, the strength and/or the water retention) allows a higher manufacturing capacity. A reduction in moulding temperature and/or pressure may lead to lower energy consumption.

Besides it has been found possible to obtain a moulding with improved physical properties, such as mechanical strength. Further, it has been found that a method according to the invention enables a very high repeatability of manufacturing products with respect to dimensions and physical properties.

A product obtainable in accordance with the invention demonstrates good biodegradability. A product made from pre-treated bran, in particular a product without added binders (binders are discussed further below), shows an essentially full degradability of typically about 30 days or less under conditions typical for the European sea climate.

It has further been found that the pre-treatment contributes to controlling and setting the moisture content of the fibre particles.

The fibre particles used in accordance with the present invention can be any fibre particles of plant origin that have bran-like properties. In particular suitable is a bran, more in particular loose bran, including a fraction thereof (in particular a bran fraction defined by a dry particle size in the range of 0.01-2.80 mm). Preferred fibre particles are wheat bran, rye bran, barley bran, corn bran, oat hulls and mixtures of fibre particles comprising any of these bran-types. The fibre particles preferably have a structurally bound moisture content of 7 to 46 wt.%, more preferably 7-26 wt.%, even more preferably 9-20 wt.%, based upon the total weight of the fibre particles. Very good results have been achieved with a moisture content in the range of 10-15 wt.%.

A cheap yet very suitable source for fibre particles is a fraction between rough bran and wheat flour. This fraction is known in the art as wheat feed, midlings or pet food mids.

The (moist) fibre particles may be present in a material further comprising one or more additives when being disrupted and/or being moulded. Hereafter, when referred to fibre particles, this is intended to include fibre particles present in a material. such as a mixture, further comprising said one or more additives. The fibre particle content (including moisture) in the material during disrupting and/or moulding is preferably 80-100 wt.%, more preferably at least 85 wt.%, even more preferably at least 90 wt. %.

The total additive content is preferably less than 20 wt.% (for consistency with 80-100% fibres), more preferably less than 15 wt.%, even more preferably 0.1-12 wt.%. (based upon the total weight of fibre particles, including moisture, plus additives).

Preferably at least one additive selected from the group consisting of binders, water repelling agents, impregnating substances, fragrances, aroma providing additives, non-fibrous fillers, moisture retaining agents, and colouring agents is present. Of these additives a binder is much preferred.

Binders may be added in order to improve the performance of the produced articles further. Preferably the binder content is about 1-15 wt.% (based upon the total weight of fibre particles, including moisture, plus additives). Very good results have been achieved with a binder content of about 5-12 wt. %, *e.g.* about 10 wt. % .

Preferably at least part of the binder (*e.g.* about 10 wt. % or less) is added to the pre-treated fibre particles prior to the moulding. The combination of pre-treatments and binders has been found to be very successful; the pre-treatment contributes to a stiffer product and shorter production time, whereas the binder contributes to a tougher material, improved water resistance and/or reduced energy consumption during production.

A product made from pre-treated bran with added binders may demonstrate impeded degradation. However, a full degradation under industrial composting conditions (according to EN 13432) is then still feasible. The skilled person will know how to select suitable binders to this respect, based upon the information disclosed herein and general common knowledge.

Very good results have been achieved with a viscous, tough polymer as a binder. Due to the viscous, tough nature of the binders, the overall mechanical properties of the mouldings are improved: tougher (less brittle), more flexible, better impact strength.

Preferred binders include biodegradable polymers like biodegradable polyesters, polycaprolactone, Poly(lactic acid), Biopol (poly(3-hydroxy butanoic acid -co-3-hydroxy pentanoic acid)); biodegradable vinyl polymers, such as (partially hydrolysed) polyvinylacetates and polyvinylalcohol; and binders based on renewable raw materials such as carbohydrates, cellulose polymers, natural resins (such as tree resins) and proteins.

Very good results have been achieved with a biodegradable polyester comprising at least one organic acid such as terephthalic acid, succinic acid and adipic acid and an aliphatic diol such as 1,4-butanediol. Particular good results have been achieved with a biodegradable polyester of terephthalic acid, adipic acid and 1,4-butanediol (such as Ecoflex ®(BASF AG) or Eastar Bio™ (Eastman)) and with a biodegradable ester made of succinic acid, adipic acid and an aliphatic diol such as 1,4-butanediol) (e.g. Bionolle (Showa Highpolymer Co. )).

With respect to proteins, proteins such as casein and derivatives thereof (such as sodium caseinate and other caseinates), zein, gluten and gelatines are particularly preferred. Moreover mixtures of any of the above-mentioned binders can be used.

Very suitable as binders are ester derivatives of tree resins, in particular glycerol esters.

A highly preferred tree resin is gum rosin (also known as colophony) or a derivative thereof. Very good results have been achieved with a gum rosin ester, in particular with glycerol esters of gum rosin and pentaerythritol esters of gum rosin.

The binder content may be chosen in a wide range, e.g. up to about 15 wt. % Very good results have been achieved with a method wherein the binder content is at least 1 wt.%, preferably about 5-12 wt.%, e.g. about 10 wt. %.

The addition may take place before, during and/or after disrupting said fibre particles. Preferably a binder is added after the pre-treatment, typically directly before moulding the material

A binder may have the form of powder, fibre or granulate. Preferred binders include binders in the form of powders (in particular powders having an average particle size less than 2 mm) and fibres for their good binding properties.

A binder may be purchased in the desired form of such as a fibrous binder, or may be converted, e.g. by milling or spinning.

The mixing of disrupted bran and binder may be carried out using an ordinary technique for powder mixing. A highly suitable mixing method is barrel drum mixing. Very good results have been achieved with extrusion mixing.

The term "disrupting" is used herein in a broad sense and generally includes altering the surface such that it is roughened up and/or opened up. As a result of the disrupting, at least part of the fibre particles is preferably reduced in size. The disrupting can very conveniently be carried out by a mechanical treatment, in particular by shearing. Very suitable ways of disrupting include extruding, milling, refining and combinations thereof. Such techniques are known in the art and the skilled person will know how to employ these techniques in such a way that disrupting conditions occur, based upon general common knowledge and the present description and claims. It is observed that a mechanical force required for mixing (e.g. by extrusion or kneading) is typically lower than a mechanical force used for disrupting the particles.

Good results have for example been achieved with a disrupting treatment wherein a energy input of 10-500 kWh/tonne is applied, more particular in the range of 10-100 kWh/tonne.

Very good results have been realised by disrupting the fibre particles - more in particular the bran - by extruding, more in particular by extruding in a twin-screw extruder. The extruding takes preferably place in a extruder with at least one negative transport unit (also referred to as RSE: reversed screw elements or as negative pitch elements).

Extruding is preferably carried out under co-rotating conditions. Very suitably, the screw(s) of the extruder, in particular: a twin screw extruder has trapezoidal thread (buttress thread). This has for example been found advantageous because of the high mixing efficiency combined with high throughputs. This enables the process to be economically attractive with large capacities.

The temperature during the disrupting is not particularly critical. Good results have been achieved with a method wherein the disrupting was carried out under conditions wherein the temperature of the fibre particles remains below 200°C, preferably below a temperature at which the colour of the particles starts to change noticeably. Such temperature depends on the nature of the fibre particles, and is typically about 150-160°C. Very good results have been achieved at a temperature of about 120°C or less. The lower temperature limit is not particular critical. In practice the temperature during disrupting will generally be at least about 20°C, preferably at least 50°C. Very good results have been achieved with a method wherein milling was performed under ambient temperature (typically about 25°C) and/or extrusion at a temperature of about 100-120°C.

Preferably the temperature is raised (*e.g.* to about 100°C) as result of the disrupting, such as by extruding. Optionally the temperature is controlled at a set-point value.

Good results have also been realised with milling and sieving as disruption technique. Milling is particularly attractive technique, since bran-suppliers are typically members of the wheat milling industry and this industry possesses all the required machinery. Wheat bran is by nature a fairly heterogeneous material, comprising large particles of up to 3 mm and small particles of about 0.005 mm. The large particles are usually mainly almost intact seed hulls. Especially, these larger particles may contribute to defects and weak spots in the final products. Therefore, it is beneficial to sieve crude bran, to mill the residue and to feed the milled bran back to the sieve. Bran that is sieved and milled in this manner possesses a much narrower particle size distribution and renders stiffer and stronger products after compression moulding. For this purpose a preferred milling equipment is (commercially available) equipment of the wheat milling industry. The preferred type of sieves are typically the normally used vibrating sieves with sieve sizes of 2 mm or less, and preferably of about 1 mm.

The disrupted fibre particles may further be processed in any suitable way to form the moulding. The skilled person will be able to choose suitable process variables such as temperature, pressure, compressive force, moisture content of the fibre particles such as the bran as well as grain size are chose, in dependence on moulding size, wall thickness and shape of final products, based upon common general knowledge and the information disclosed in the present description and claims. Particularly suitable is a method as described in WO 01/39612.

The disrupted fibre particles are optionally introduced directly into the mould of the press or are optionally palletised or briquetted prior to placing the particles in the mould. Direct introduction is preferred since thermal energy is conserved and hence energy costs are minimised. However, direct injection is not always feasible for production logistical reasons. In case of briquetting, the briquetting is preferably carried out such that the formed briquette has a weight equal to the weight needed to prepare a single moulding or to that of an integer denominator fraction of the weight needed to prepare a single moulding. Pelletted particles and briquetted particles are commercially available. Suitable are for example such particles that are used for preparing animal feeds.

The moisture content in the disrupted particles, when placed in the mould is preferably in the range of 7-45 wt.%, more preferably in the range of 7-25 wt.%, even more preferably in the range of 10-18 wt%.

The moulding is preferably carried out while subjecting the disrupted fibre particles in the mould to a temperature in the range of 20-450°C, more preferably 100-200°C, even more preferably 100-170°C. Preferably, the moulding is heated before placing the fibre particles.

In a generally preferred method, the moulding is carried out while subjecting the disrupted fibre particles to a pressure within a range of 5 - 150 MPa, more preferably 10 - 100 MPa, even more preferably 20-60 MPa.

In a method wherein use is made of a binder and a water repelling agent very good results have been achieved with a pressure in the range of 5-50 MPa, more in particular in the range of 10-30 MPa.

The pressure can be effected by a compressive force, by temperature effect (in a closed mould) or a combination thereof.

Very good results have been achieved with a method wherein the fibre particles in the mould are exposed to a compressive force which results in a pressure of up to 150 MPa in the mould, preferably to a pressure of 5 -100 MPa, even more preferably 20-60 MPa during pressurisation in the mould. Application of compressive force is preferably achieved by use of a hydraulic press, mechanical press, hydraulic hammer or the like.

The moulding can be carried out in a single step, preferably of about 1-30 sec., more preferably of about 2 to 15 sec. Alternatively the moulding can be carried out in successive cycles, preferably of up to 5 seconds duration, more preferably of 0.5 to 2.5 seconds with alternate pressure relieving periods. Subsequent steps may have the same or different durations. In particular of the first step it is preferred to have a relatively short duration, e.g. up to about 2 sec.

Relief times and number of relief steps can routinely be determined by the skilled person, based upon the type of mould used, the information disclosed herein and general common knowledge. Relief times are preferably less than 2 sec. More preferably the release time is just long enough to let the steam off, typically about 0.2-0.5 sec. Thus it has been found possible to get a very satisfying release of steam, whilst avoiding an unfavourable high degree of cooling and drying of the surface of the material in the mould.

Very good results, with respect to product properties, have been achieved with a cyclic moulding of 2 to 5 cycles, each preferably having a duration of 0.5 to 5 seconds, more preferable 0.5 to 2 seconds.

Preferably, the fibre particles are exposed to a temperature within a range of 20 to 450°C - more in particular in the range of 100-300°C and/or a pressure within a range from 5-100 MPa - more in particular in the range of 20- 60 MPa - prior to placing it in the mould and thereafter, while maintaining it under pressure, the fibre particles are introduced into a preheated mould.

Very good results have been achieved with a method wherein the fibre particles are placed on a part of a multipartite, preferably bipartite, heated mould, wherein the fibre particles, such as the bran, are exposed to a compressive force which results in a pressure in the mould of up to 100 MPa in each cycle. Preferably, the upper and lower halves of the bipartite mould are preheated to different temperature. It has been found that thus a smoother surface is formed on the hotter surface. Very good results have been achieved with a method wherein the difference in temperature between upper and lower halves is about 5 to 20°C.

The moulding may optionally be processed further by any suitable means. It may for example be provided with a film forming substance, such as a coating, for aesthetic or technical reasons. The skilled person will know how to choose a suitable coating.

The present invention is now further illustrated by the following examples.

### Example 1: Extruded bran

Normal wheat bran (received from the mill of Mr. Wysocki in Giżycko (PL)) was moistened to increase the water content to 20%. Subsequently, the moist bran was pre-treated by extrusion with a Clextral BC45 without a pre-die and die (pressure-less operation). This is a co-rotating and intermeshing twin screw extruder with a diameter of 56 mm and an L/D-value of 28. The screw speed was set at 50 rpm and the barrel temperature was set at 100 °C. Both screws have one negative pitch element at the same location. These RSE were characterised by the code-15H10, meaning a negative pitch of 15 mm and a helical opening of 10 mm. The resulting throughput was about 35 kg dry matter/hr, which corresponds to an energy input of about 50 kWh/tonne. The extrudate was a hot, damp and sticky material with a moisture content of 16.5 %. Visual inspection after cooling revealed that the average particle size had decreased and that the almost intact seed hulls (present in the original bran) were fully absent in the extruded bran.

Plates of 23 cm diameter were compression moulded from the extruded bran according to the standard procedure described in WO 01/39612 and compared to plates produced from normal bran. The flexural stiffness of the plates had improved: 1661 ± 93 MPa (extruded) and 1299 ± 106 MPa (normal). The mechanical strength was slightly improved: 10.6 ± 0.7 MPa (extruded) and 8.7 ± 0.9 MPa (normal). The applied test method was ISO 178, using a ZWICK Z1445 and 1 kN load cell, a pre-load of 0.200 N with a speed of 2 mm/minute, the test-speed was 10 mm/minute. The water absorptiveness of the plates made from extruded bran were slightly less well than those made from normal bran, the corresponding Cobb-values were: 137 ± 5 g/m² (extruded bran) and 97 ± 5 g/m² (normal bran). The applied test method was ISO 535, using exposures of 120 seconds.

The water absorptiveness was also determined with a self-developed test method. Soup bowls were produced via the standard compression moulding technique. The bowls were filled with 100 ml of water for 15 minutes. Subsequently the water was removed, the interior of the bowl was blotted dry with tissue paper and the weight was determined. From a comparison between the initial and the final weight the weight increase percentage was calculated. Soup bowls made from normal bran showed a water uptake of 10 ± 1 % and soup bowls made from extruded bran showed a water uptake of 35 ± 3 %.

### Example 2: Milled bran

Normal wheat bran (received from the mill of Mr. Wysocki in Giiycko (PL)) was sieved in a vibration sieve with a square mesh of 1 mm. A small fraction (<10 %) passed the sieve directly. The reject was milled in a standard motor mill for 10 seconds per batch. The milled bran was sieved with the same vibration sieve. Now the majority of bran (>70 %) passed through the sieve. The fractions of sieved bran were combined. The energy input for this pre-treatment was about 10 kWh/ tonne.

The sieved bran was a very fine, light brown powder. The moisture level was increased from 9 % to 15.3 %. Soup bowls were produced via the standard compression moulding technique. The mechanical properties of the produced soup bowls from milled bran were very similar as those produced from extruded bran: stiffer and stronger than normal bran. The water uptake of milled bowls was determined to be 12 ± 2 %, comparable to those made of normal bran.

### Example 3: Extrusion mixing of bran and Ecoflex

Normal wheat bran (received from the mill of Mr. Wysocki in Gizycko (PL)) was moistened to increase the water content to 20%. Subsequently, the moist bran was extruded together with Ecoflex granulate of BASF with a Clextral BC45 without a pre-die and die (pressure-less operation). The bran and the Ecoflex were automatically weight-dosed in a relation of 90 % to 10 %, respectively. This is a co-rotating and intermeshing twin screw extruder with a diameter of 56 mm and an L/D-value of 28.

The screw speed was set at 40 rpm and the temperature of three of the five zone was set. The first zone (feed) was not heated and the temperature was 15 °C on average, the second zone was set at 140 °C and was on average 131 °C. The third zone was not-heated but averaged on 117°C. The fourth zone was set at 140 °C and was 143 °C on average. The fifth zone (die) was set at 100 °C and was actually 98 °C.

Both screws had one negative pitch element at the same location. These RSE were characterised by the code-15H10, meaning a negative pitch of 15 mm and a helical opening of 10 mm. The resulting throughput was about 34.6 kg dry matter/hr, which corresponds to an energy input of about 50 kWh/tonne. The extrudate is a hot, damp and sticky material.

Plates of 23 cm diameter were compression-moulded from the extruded mixture of bran and Ecoflex according to the standard procedure described in WO 01/39612 and compared to plates produced from normal bran.

The flexural stiffness of the plates was reduced: 665 ± 142 MPa (extruded mixture) and 1299 ± 106 MPa (normal). The mechanical strength was also reduced: 4.8 ± 0.7 MPa (extruded mixture) and 8.7 ± 0.9 MPa (normal). The applied test method was ISO 178, using a ZWICK Z1445 and 1 kN load cell, a pre-load of 0.200 N with a speed of 2 mm/minute, the test-speed was 10 mm/minute.

The water absorptiveness of the plates made from the extruded bran mixture was improved compared to those made from normal bran, the corresponding Cobb-values were: 50 ± 5 g/m² (extruded mixture) and 97 ± 5 g/m² (normal bran). The applied test method was ISO 535, using exposures of 120 seconds.

### Example 4: Extruded bran and a compression moulding process

Extruded bran was prepared as in Example 1. The resulting moisture content was 15.8 %. This pre-treated bran was used to produce plates of 23 cm diameter via a shortened compression moulding technique and compared to plates produced from normal bran. The shortened process comprised of only three pressure stages in stead of five pressure stages. The mechanical and visual properties of the products were identical to those produced in five stages.

The flexural stiffness was as follows: 1661 ± 93 MPa (5 stages) and 1794 ± 414 MPa (3 stages). The mechanical strength was as follows: 10.6 ± 0.7 MPa (5 stages) and 10.0 ± 1.4 MPa (3 stages). The applied test method was ISO 178, using a ZWICK Z1445 and 1 kN load cell, a pre-load of 0.200 N with a speed of 2 mm/minute, the test-speed was 10 mm/minute.

### Example 5: Extrusion mixing of bran, cellulose diacetate and triethyl citrate

A compound was made from a Cellulose diacetate granulate named Bioceta of Acetati S.p.A. and 40 % triethyl citrate on a Berstoff extruder. The produced compound was milled and sieved through a 2 mm mesh.

Extruded bran was prepared as in Example 1. The resulting moisture content was 15.8 %. This pre-treated bran was mixed with the Cellulose diacetate compound in ratio of 9 : 1 in a barrel mixer. Plates of 23 cm diameter were compression-moulded from the mixture of pre-treated bran and compounded Cellulose diacetate according to the standard procedure described in WO 01/39612 and compared to plates produced from normal bran. The flexural stiffness of the plates was reduced: 441 ± 71 MPa (mixture of pre-treated bran and compound) and 1299 ± 106 MPa (normal). The mechanical strength was also reduced: 4.6 ± 0.7 MPa (mixture of pre-treated bran and compound) and 8.7 ± 0.9 MPa (normal). The applied test method was ISO 178, using a ZWICK Z1445 and 1 kN load cell, a pre-load of 0.200 N with a speed of 2 mm/minute, the test-speed was 10 mm/minute. The toughness was strongly improved: 1.7 ± 0.1 KJ/m² (mixture of pre-treated bran and compound) and 1.0 ± 0.1 KJ/m² (normal). The applied test method was ASTM D256, using a Ceast Resil 50 and a 4 J hammer (type 6547.946) with a speed of 3.46 m/s.

## Claims

1. Method for making a biodegradable moulding, comprising disrupting the surface of fibre particles, such as bran, placing the disrupted fibre particles in a mould and exposing the disrupted fibre particles in the mould to a pressure to form the moulding.

2. Method according to claim 1, wherein the disrupting takes place by shearing, preferably by extruding, milling, refining or a combination thereof.

3. Method according to claim 2, wherein the extruding is carried out in a twin-screw extruder.

4. Method according to any one of the claims 2 or 3, wherein a energy input of 10-500 kWh/tonne is applied, more particular in the range of 10-100 kWh/tonne.

5. Method according to any of the preceding claims, wherein the temperature of the fibre particles during disrupting is less than 200°C, preferably less than 160°C more preferably between 20°C and 120°C.

6. Method according to any of the preceding claims, wherein the fibre particles in the mould are exposed to a temperature in the range of from 20 to 450°C and a pressure in the range of from 5 to 100 MPa.

7. Method according to any of the preceding claims, comprising adding at least one additive selected from the group consisting of impregnating substances, binders, water repelling agents, fragrances, aroma providing additives, non-fibrous fillers, moisture retaining agents, and colouring agents to the fibre particles, before, during or after disrupting said particles.

8. Method according to claim 7, wherein a binder is added in a concentration of up to 15 wt %.

9. Method according to claim 7 or 8, wherein the binder is selected from the group consisting of polyesters, preferably biodegradable polyesters, more preferably biodegradable polyesters of terephthalic acid, adipic acid and 1,4-butanediol; proteins, preferably caseins, derivatives of caseins, zeins, gluten and gelatines; tree resins and derivatives thereof, preferably gum rosin and derivatives thereof.

10. Method according to any one of the preceding claims wherein the fibre particles have a structurally bound moisture content of 7 to 45 wt. %, based upon the total weight of the fibre particles.

11. Method according to any one of the preceding claims wherein the disrupted fibre particles are palletised or briquetted prior to placing the disrupted particles in the mould.

12. Method according to any one of the preceding claims, wherein the moulding is a table utensil or packaging container.

13. Method according to any one of the preceding claims, comprising providing the moulding with a coating.

14. Method according to any one of the preceding claims, wherein the bran is a wheat bran, a rye bran, a barley bran, corn bran, oat hulls or a mixture thereof.

15. Method according to any one of the preceding claims, wherein the fibre particles have a particle size in the range of 0.01 to 2.80 mm.

16. A biodegradable moulding obtainable by a method according to any one of the preceding claims.
